## Europäisches Patentamt

## European Patent Office

## Office européen des brevets

(19)

(11) Veröffentlichungsnummer: **0 249 712**
**B1**

(12) **EUROPÄISCHE PATENTSCHRIFT**

(45) Veröffentlichungstag der Patentschrift :
**11.10.89**

(21) Anmeldenummer : **87105632.1**

(22) Anmeldetag : **15.04.87**

(51) Int. Cl.⁴ : **F 16 D 41/06**, F 16 D 41/07

(54) **Käfig für einen Freilauf.**

(30) Priorität : **20.06.86 DE 3620804**

(43) Veröffentlichungstag der Anmeldung :
**23.12.87 Patentblatt 87/52**

(45) Bekanntmachung des Hinweises auf die Patenterteilung : **11.10.89 Patentblatt 89/41**

(84) Benannte Vertragsstaaten :
**DE FR GB IT**

(56) Entgegenhaltungen :
**DE–A– 1 675 151**
**DE–A– 2 005 894**
**DE–A– 2 136 650**
**DE–C– 857 458**
**FR–A– 1 565 289**
**FR–A– 2 456 258**
**GB–A– 2 138 082**
**US–A– 2 793 729**
**US–A– 4 088 211**

(73) Patentinhaber : **INA Wälzlager Schaeffler KG**
**Industriestrasse 1-3 Postfach 1220**
**D-8522 Herzogenaurach (DE)**

(72) Erfinder : **Neuwirth, Ernst**
**Anna-Hermann-Strasse 48**
**D-8522 Herzogenaurach (DE)**
Erfinder : **Rabe, Jürgen, Dipl.-Ing.**
**Talblick 6**
**D-8521 Aurachtal (DE)**
Erfinder : **Ritter, Joachim, Dipl.-Ing. (FH)**
**Schützstrasse 7**
**D-8522 Herzogenaurach (DE)**

(74) Vertreter : **Klug, Horst, Dipl.-Ing. (FH)**
**c/o INA Wälzlager Schaeffler KG Postfach 12 20**
**D-8522 Herzogenaurach (DE)**

## Beschreibung

Die Erfindung betrifft einen Käfig für einen Freilauf, der aus einem metallischen Außenring besteht, in dem konzentrisch ein metallisches Innenteil angeordnet ist, und bei dem in einem zwischen Außenring und Innenteil angeordneten Käfig Klemmelemente untergebracht sind, die unter Einwirkung von Federn in Klemmkontakt mit Flächen des Außenrings einerseits und des Innenteils andererseits gehalten sind, wobei der Käfig aus einem spritz- oder gießbaren polymeren Werkstoff gebildet ist und Taschen für die Klemmelemente aufweist, welche durch Stege und wenigstens einen mit diesen verbundenen Stirnring gebildet sind, wobei wenigstens eine Umfangsfläche des Käfigs in Art eines Gleitlagers mit einer Zylinderfläche des benachbarten Bauteils (Außenring bzw. Innenteil) zusammenwirkt.

Ein derartiger Käfig, der durchaus zufriedenstellend funktioniert, ist durch die De-A-21 36 650 bekannt.

Bei dem bekannten Käfig treten jedoch Probleme auf, wenn er unter Betriebsbedingungen eingesetzt werden soll, die über einen extrem weiten Bereich, z. B. von — 40 °C bis + 150 °C, schwankende Betriebstemperaturen mit sich bringen. Es wurde beobachtet, daß abgesehen von den Problemen, die aufgrund der unterschiedlichen Temperaturausdehnungskoeffizienten des aus einem metallischen Werkstoff bestehenden Innenteiles einerseits und des aus einem polymeren Werkstoff bestehenden Käfigs andererseits hinsichtlich des Lagerspiels zwischen beiden Teilen ohnehin zu erwarten sind, ein weiteres Problem auftritt, das darin besteht, daß, nachdem der Käfig erstmalig erhöhten Betriebstemperaturen ausgesetzt war, bleibende Schrumpfungserscheinungen auftreten, die dazu führen, daß zwischen dem Innenteil und der Bohrung des Käfigs ein Festsitz vorliegt, während zwischen dem Außenumfang des Käfigs und dem Außenring ein unzulässiges Spiel entsteht.

Diesen Schrumpfungserscheinungen kann, soweit sie die Zentrierung des Käfigs im Außenring betreffen, nur bedingt entgegengewirkt werden, da sie in einem Umfang stattfinden, der durch entsprechende Maßkorrekturen des Käfigs nicht ausgeglichen werden kann. Um sicherzustellen, daß im Betrieb kein unerwünschtes Spiel zwischen dem Außenumfang des Käfigs und der Bohrung des Außenringes entsteht, müßte der Käfig nämlich mit einem derart vergrößerten Außendurchmesser gefertigt werden, daß es ausgeschlossen wäre, den Käfig noch in den Außenring einzusetzen.

Der Erfindung liegt die Aufgabe zugrunde, einen Käfig der oben angegeben Art für extrem schwankende Betriebstemperaturen zu schaffen, der unabhängig von der jeweils vorliegenden Betriebstemperatur relativ zu den benachbarten Bauteilen (Außenring bzw. Innenteil) maßstabil bleibt und insbesondere zu dem Bauteil, mit dem er der Art eines Gleitlagers zusammenwirkt, einen Lagerspalt von konstanter Breite aufrechterhält.

Nach der Erfindung wird dies dadurch erreicht, daß der Käfig wenigstens im Bereich des Stirnringes eine ringförmige metallische Armierung enthält, welche formschlüssig, insbesondere durch Umspritzen, mit dem Käfig verbunden ist und deren Temperaturausdehnungskoeffizient im wesentlichen dem von Außenring und Innenteil entspricht.

Durch diese Maßnahme wird dem Käfig durch die Armierung, die in ihrem Temperaturausdehnungskoeffizienten im wesentlichen denen des Außenringes und des Innenteils entspricht, ein Temperatur-Dehnungs-Verhalten aufgezwungen, das dem des Außenringes und des Innenteils entspricht, so daß während des Betriebs stets eine einwandfreie Zentrierung des Käfigs im Außenring und ein konstantes Lagerspiel zwischen der Bohrung des Käfigs und dem Innenteil gewährleistet ist.

Dieser Käfig ist sowohl für Klemmrollen- als auch für Klemmkörperfreiläufe anwendbar. Im ersteren Fall enthält er zylindrische Klemmrollen, die mit Klemmrampen in der Bohrung des Außenringes einerseits und der zylindrischen Oberfläche des Innenteils andererseits zusammenwirken. Im zweiten Falle enthält er unrunde Klemmkörper, die mit der zylindrischen Bohrung des Außenringes einerseits und der zylindrischen Oberfläche des Innenteils andererseits zusammenwirken.

Nach einer Variante der Erfindung ist die Armierung durch ein scheibenförmiges Blechteil gebildet, wobei nach einer Ausführung der Erfindung dessen radiale Erstreckung im wesentlichen der des Stirnringes entspricht. Durch die hohe Steifigkeit des derart ausgebildeten Blechteils in radialer Richtung wird gewährleistet, daß der Käfig in seinem Temperatur-Dehnungs-Verhalten dem der Armierung folgt, und den Schrumpfungserscheinungen entgegengewirkt.

Unter Umständen genügt es hinsichtlich der Steifigkeit der Armierung auch, diese nach einer Ausführungsform der Erfindung durch ein hülsenförmiges im Bereich des Stirnringes angeordnetes Blechteil zu bilden, wobei dieses nach einer Variante der Erfindung in eine entsprechende Aussparung in der Bohrung des Käfigs eingeschnappt sein kann.

Um sicherzustellen, daß der Käfig auch im Bereich der Stege dem Temperatur-Dehnungs-Verhalten der Armierung in dem erforderlichen Maße folgt, kann es zweckmäßig sein, nach einer Variante der Erfindung die ringförmige Armierung mit im wesentlichen axial gerichteten Fortsätzen zu versehen, die sich in die Stege erstrecken.

In der Regel sind diejenigen Bereiche der Bohrung des Käfigs, welche mit dem Innenteil in Eingriff stehen, im Hinblick auf dessen meist günstige Gleit- und Verschleißeigenschaften aus dem polymeren Werkstoff gebildet. Dabei können nach einer Variante der Erfindung die Eigenschaften des durch die Bohrung des Käfigs und das Innenteil gebildeten Gleitlagers dadurch verbessert werden, daß der Käfig im Bereich der Stege radial nach innen vorspringende Segmente aus dem polymeren Werkstoff aufweist deren radial nach innen gerichtete Flächen ein Vielflächengleitlager für das Innenteil bilden.

Das zwischen der Bohrung des Käfigs und dem Innenteil vorhandene Lagerspiel kann dann völlig von dem Temperatur-Dehnungs-Verhalten des polymeren Werkstoffs unabhängig gemacht werden, wenn nach einer Ausführung der Erfindung im Bereich der Bohrung des Käfigs das Blechteil um wenigstens einen Teil seiner Dicke gegenüber dem polymeren Werkstoff radial nach innen vorspringt, wobei im Hinblick auf das möglicherweise ungünstige Gleit- und Verschleißverhalten der metallischen Werkstoffe des Innenteils und des Blechteils dessen Bohrungswandung mit einer Schicht eines Gleitlagerwerkstoffs versehen sein kann.

Außerdem kann auch die Genauigkeit der Zentrierung des Käfigs im Außenring von dem Temperatur-Dehnungs-Verhalten des polymeren Werkstoffs unabhängig gemacht werden, wenn sich nach einer Ausführungsform der Erfindung die Armierung zur äußeren Mantelfläche des Käfigs erstreckt, an ihrem Außenumfang frei von polymerem Werkstoff ist und der Käfig über den Außenumfang der Armierung im Außenring zentriert ist. Durch diese Maßnahme ergibt sich außerdem der Vorteil, daß bei der Übertragung der in die Wandung der Bohrung des Käfigs eingeleiteten Radialkräfte auf die Bohrung des Außenringes Deformationen des Käfigs an seinem äußeren Umfang, die die Zentrierung des Käfigs im Außenring nachteilig beeinflussen könnten, vermieden sind.

Ist an dem Käfig wenigstens ein radial nach außen gerichteter Vorsprung, welcher als Verdrehsicherung in eine entsprechende Ausnehmung des Außenringes eingreift, vorgesehen, erstreckt sich die Armierung nach einer Ausführung der Erfindung in den Vorsprung und ist an dessen Kontaktfläche mit der Ausnehmung frei von polymerem Werkstoff, wodurch Verschleiß an dieser Stelle vermieden wird.

Eine letzte Ausführungsform der Erfindung sieht vor, daß der Vorsprung durch einen Fortsatz der Armierung gebildet ist.

In den beigefügten Zeichnungen sind Ausführungsbeispiele der Erfindung dargestellt. Es zeigen:

Fig. 1 in perspektivischer Darstellung einen Ausschnitt eines erfindungsgemäßen Käfigs,

Fig. 2 einen teilweisen Querschnitt durch einen mit einem erfindungsgemäßen Käfig versehenen Klemmrollen-Freilauf,

Fig. 3 einen teilweisen Querschnitt durch einen erfindungsgemäßen Käfig nach der Linie III-III in Figur 4,

Fig. 4 und 5 teilweise Längsschnitte nach den Linien IV-IV und V-V in Figur 3,

Fig. 6 einen teilweisen Querschnitt durch einen erfindungsgemäßen Käfig nach Linie VI-VI in Figur 7,

Fig. 7 und 8 teilweise Längsschnitte nach den Linien VII-VII und VIII-VIII in Figur 6,

Fig. 9 einen teilweisen Querschnitt durch einen erfindungsgemäßen Käfig nach Linie IX-IX in Figur 10,

Fig. 10 und 11 teilweise Längsschnitte nach den Linien X-X und XI-XI in Figur 9,

Fig. 12 einen teilweisen Querschnitt durch einen erfindungsgemäßen Käfig nah Linie XII-XII in Figur 13,

Fig. 13 und 14 teilweise Längsschnitte nach den Linien XIII-XIII und XIV-XIV in Figur 12,

Fig. 15 in vergrößerter Darstellung die Einzelheit A aus Figur 12,

Fig. 16 einen teilweisen Querschnitt durch einen mit einem erfindungsgemäßen Käfig versehenen Klemmkörper-Freilauf und

Fig. 17 einen teilweisen Längsschnitt nach Linie XVII-XVII in Figur 16.

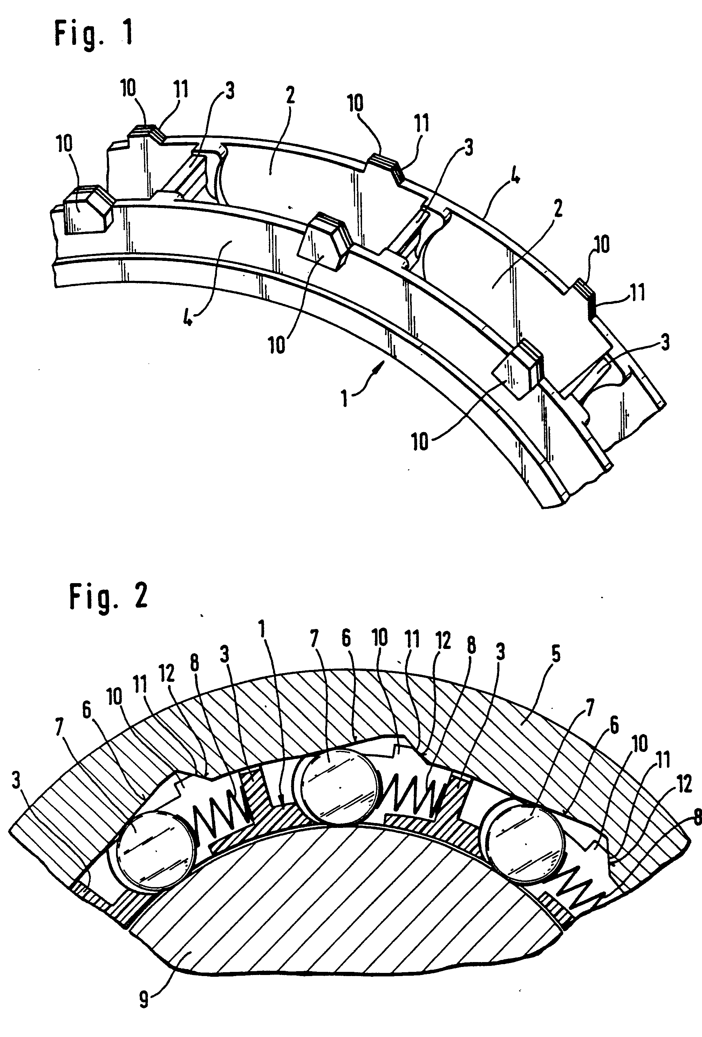

Figur 1 zeigt einen erfindungsgemäßen Käfig 1 für einen Klemmrollen-Freilauf, der aus einem polymeren Werkstoff besteht und Taschen 2 für nicht gezeigte Klemmrollen aufweist, welche durch Stege 3 und mit diesen verbundene Stirnringe 4 begrenzt sind.

Wie aus Figur 2 ersichtlich ist, weist der Klemmrollen-Freilauf, in dem der Käfig 1 Verwendung findet, einen Außenring 5 mit Klemmrampen 6 auf, mit welchen Klemmrollen 7 unter der Wirkung von Federn 8 in Eingriff stehen. Die Klemmrollen 7 liegen außerdem an der zylindrischen äußeren Mantelfläche eines sich durch die Bohrung des Käfigs 1 erstreckenden Innenteils 9 an, so daß dieses in einer Drehrichtung mit dem Außenring 5 drehfest verbindbar ist, während es in der anderen Drehrichtung frei drehbar ist. Dabei ist der Käfig 1 über seinen Außenumfang in der Bohrung des Außenringes 5 zentriert, während er selbst das Innenteil 9 in seiner als Gleitlager wirkenden Bohrung aufnimmt.

Am äußeren Umfang seiner Stirnringe 4 weist der Käfig 1 Vorsprünge 10 auf, die in der in Figur 2 dargestellten Weise mit Schrägen 11 an den Klemmrampen 6 gegenüberliegenden entsprechend geneigten Flächen 12 des Außenringes 5 anliegen und so ein Mitdrehen des Käfigs 1 in Freilaufrichtung verhindern. Die Vorsprünge 10 sind so bemessen, daß der Käfig 1 in der in Figur 2 gezeigten Winkellage zum Außenring 5, die der im Betrieb des Freilaufs entspricht, axial in diesen eingeführt werden kann. Der Käfig 1 wird dann durch die Federn 8 in dieser Position gehalten.

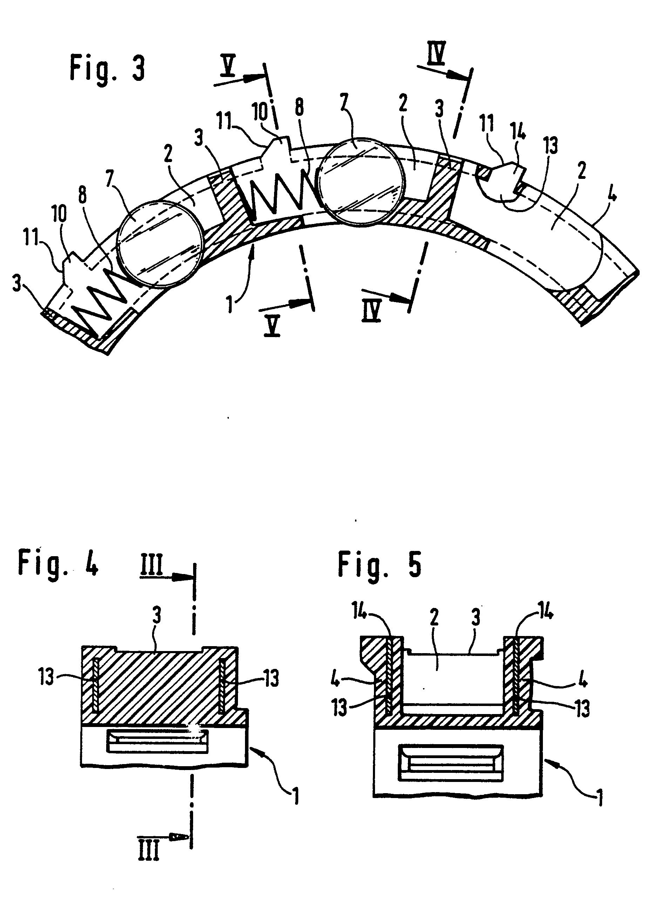

Wie die Figuren 3 bis 5 zeigen, enthält der Käfig 1 im Bereich seiner Stirnringe 4 je ein scheibenförmiges Blechteil 13, welches durch Umspritzen formschlüssig mit dem Käfig 1 verbunden ist. Die Blechteile 13, deren radiale Erstreckung im wesentlichen der der Stirnringe 4 entspricht, weisen einen Temperaturausdehnungskoeffizienten auf, der im wesentlichen denen von Außenring 5 und Innenteil 9 entspricht.

Die Blechteile 13 weisen an ihrem äußeren Umfang einstückig angebildete radial gerichtete Lappen 14 auf, mit denen sie sich in jenen Bereich der Vorsprünge erstrecken, der die Schräge 11 aufweist. Dabei sind die Lappen 14 derart ausgebildet, daß sie eine der Schräge 11 entsprechende Begrenzungskante aufweisen, welche nicht von dem polymeren Werkstoff bedeckt ist. Durch diese Maßnahme sind die Vorsprünge 10 höheren Belastungen gewachsen und zugleich vor Verschleiß geschützt, da die Lappen 14 an entsprechend den Schrägen 11 geneigten Flächen des Außenringes anliegen und somit die Kraftübertragung zwischen metallischen Teilen erfolgt.

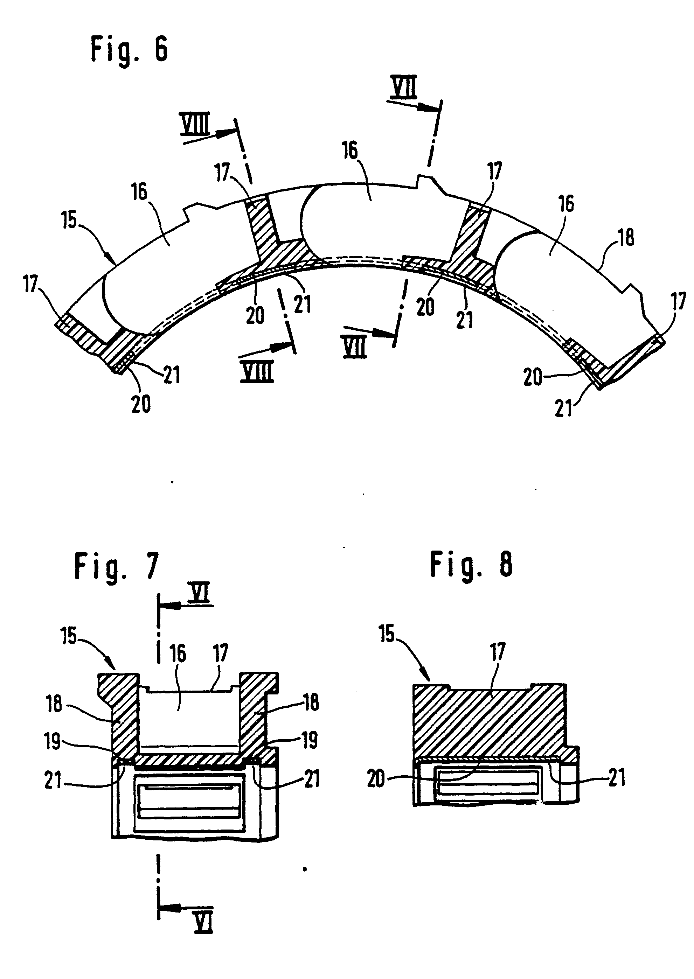

Ein weiterer erfindungsgemäßer Käfig 15 ist in den Figuren 6 bis 8 gezeigt und besteht ebenfalls aus zur Bildung von Taschen 16 für nicht gezeigte Klemmrollen durch Stege 17 miteinander verbundenen Stirnringen 18. Der Käfig 15 ist durch ein nach Art eines aus Blech gebildeten Wälzlagerkäfigs ausgebildetes Blechteil armiert, dessen hülsenförmige Abschnitte 19 in den Stirnringen 18 aufgenommen sind, wobei erstere durch sich axial in die Stege 17 erstreckende Fortsätze 20 miteinander verbunden sind. Das Blechteil ist in eine entsprechende Aussparung 21 in der Bohrung des Käfigs 15 eingeschnappt, wobei die Tiefe der Aussparung 21 geringfügig größer als die Dicke des Blechteils ist, so daß Berührungen zwischen diesem und dem Innenteil ausgeschlossen sind. Durch die vorspringenden Bereich des polymeren Werkstoffs wird ein Schmiermittelreservoir begrenzt.

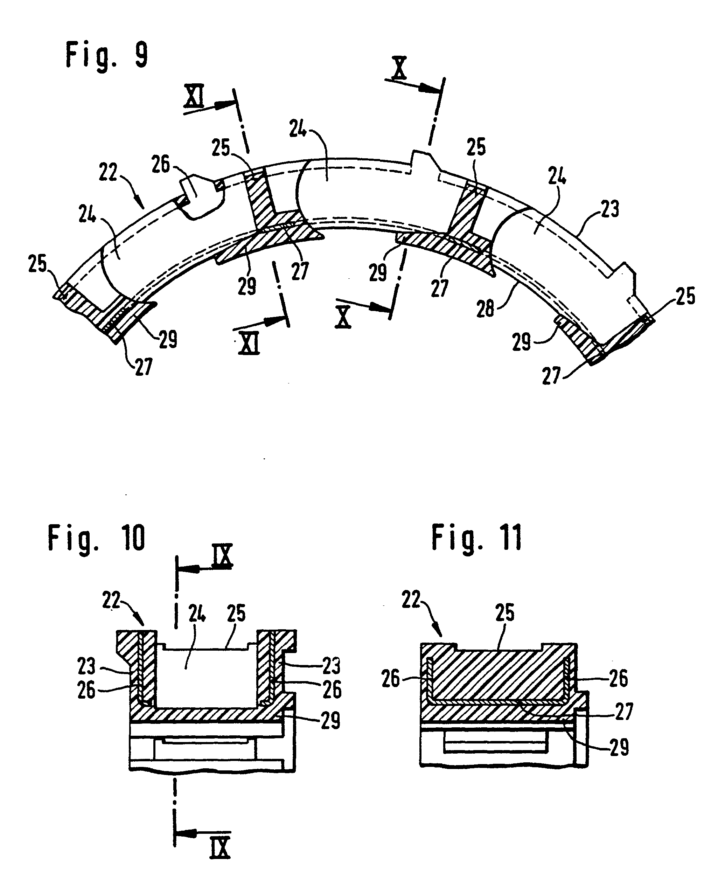

Auch der in den Figuren 9 bis 11 gezeigte erfindungsgemäße Käfig 22 besteht aus Stirnringen 23 und diese zur Bildung von Taschen 24 für nicht gezeigte Klemmrollen verbindenen Stegen 25 und entspricht in seiner Form im wesentlichen den zuvorbeschriebenen. Auch im Falle des Käfigs 22 ist das Blechteil nach Art eines aus Blech gefertigten Wälzlagerkäfigs, und zwar mit U-förmigen Querschnitt, ausgebildet, das heißt, das Blechteil weist zwei im Bereich der Stirnringe 23 angeordnete Flansche 26 auf, welche durch axial gerichtete Fortsätze 27 miteinander verbunden sind, die sich in die Stege 25 erstrecken.

Die Stirnringe 23 des Käfigs 22 weisen derart vergrößerte Bohrungen 28 auf, daß sie nicht mit dem Innenteil in Eingriff stehen. Stattdessen springen die Stege 25 mit ihren Bereichen 29 über die Bohrungen 28 der Stirnringe 23 derart segmentartig radial nach innen vor, daß die Bereiche 29 mit dem Innenteil ein Vielflächengleitlager bilden.

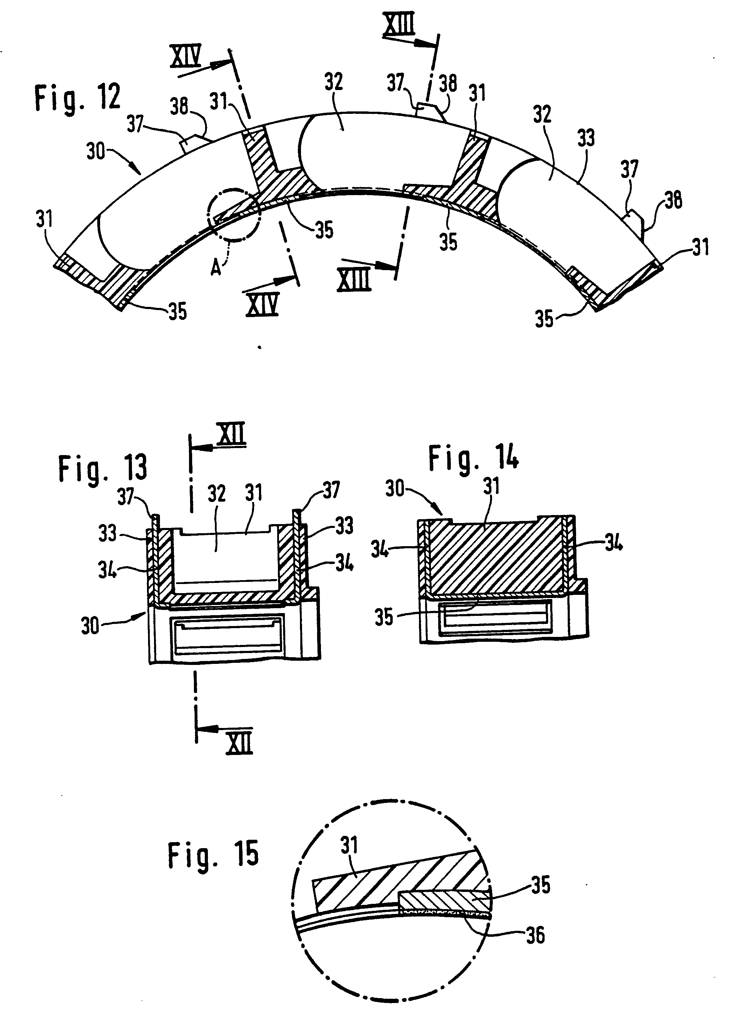

In den Figuren 12 bis 15 ist schließlich ein erfindungsgemäßer Käfig 30 dargestellt, in dessen durch Stege 31 zur Bildung von Taschen 32 für nicht gezeigte Klemmrollen miteinander verbundenen Stirnringen 33 die Flansche 34 eines nach Art eines aus Blech gefertigten Wälzlagerkäfigs mit U-förmigem Querschnitt ausgebildeten Blechteils angeordnet sind, die durch sich in die Stege 31 erstreckende Fortsätze 35 miteinander verbunden sind.

Bei dem Käfig 30 ist die mit dem Innenteil in Eingriff stehende Bohrungswandung durch die radial nach innen gerichteten Flächen des Blechteils gebildet, welches den polymerem Werkstoff um einen Teil der Blechdicke überragt.

Wie Figur 15 zeigt, ist das Blechteil an seinen mit dem Innenteil in Eingriff stehenden Flächen mit einer Schicht 36 eines Gleitlagerwerkstoffs versehen, wodurch das Gleit- und Verschleißverhalten zwischen Blechteil und Innenteil verbessert wird.

Außerdem erstrecken sich die Flansche 34 des Blechteils bis zum Außendurchmesser der Stirnringe 33 und sind an ihrem Außenumfang frei von polymerem Werkstoff. Der Käfig 30 kann somit über die Flansche 34 des Blechteils in der Bohrung des Außenringes zentriert werden.

Schließlich weisen die Flansche 34 des Blechteils an ihrem Außenumfang abweichend von den zuvor beschriebenen Ausführungen Ansätze 37 auf, die mit Schrägen 38 versehen sind, die zur Anlage an entsprechenden Flächen des Außenringes vorgesehen sind. Wie die zuvor beschriebenen Vorsprünge 10 sind auch die Ansätze 37 derart ausgebildet, daß der Käfig 30 in seiner dem Betriebszustand entsprechenden Winkellage zum Außenring axial in diesen eingeführt werden kann.

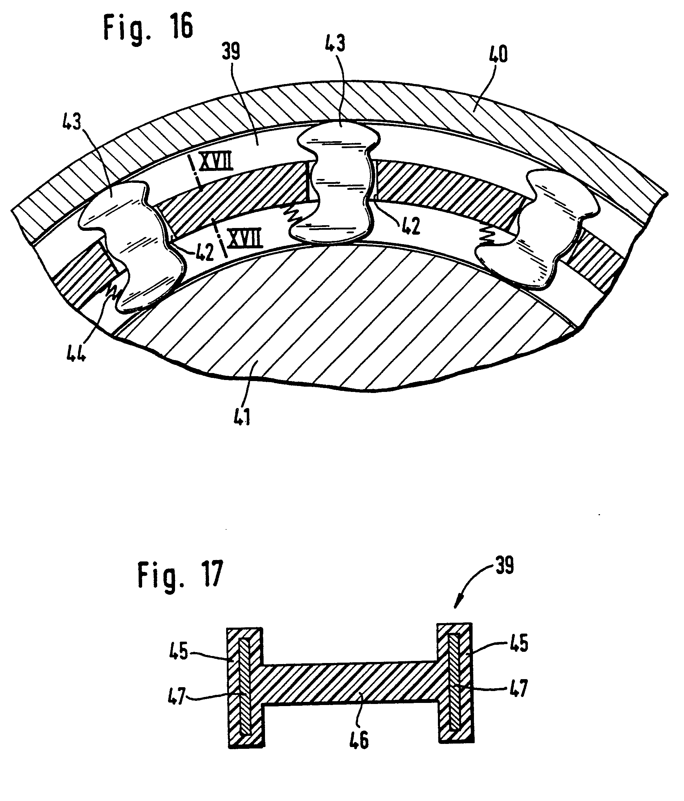

Die Figuren 16 und 17 ziegen die Anwendung des erfindungsgemäßen Käfigs auf einen Klemmkörper-Freilauf. Der Käfig 39 ist schwimmend zwischen dem Außenring 40 und dem Innenteil 41 angeordnet und enthält in Taschen 42 unrunde Klemmkörper 43 die durch Federn 44 in Klemmkontakt mit den zylindrischen Oberflächen der Teile 40 und 41 gehalten werden. Die Figur 17 zeigt, daß in den beiden Stirnringen 45 des Käfigs 39, die durch die Stege 46 miteinander verbunden sind, scheibenförmige Blechteile 47 vorgesehen sind, die durch Umspritzen formschlüssig mit dem Käfig 39 verbunden sind.

Zwischen der in den Figuren 16 und 17 dargestellten Bauform einerseits und den vorher beschriebenen Bauformen andererseits besteht lediglich insofern ein Unterschied, als hier der Käfig schwimmend zwischen dem Außenring 40 und dem Innenteil 41 angeordnet und damit in GLeitkontakt mit den zylindrischen Oberflächen dieser beiden Teile steht, während er bei den vorhergehenden Ausführungen drehfest im Außenring aufgenommen ist und lediglich Gleitkontakt zum Innenteil gegeben ist.

Obwohl die Ausführungsbeispiele ausschließlich Fensterkäfige betreffen, kann der erfindungsgemäße Käfig auch als Kammkäfig ausgebildet sein.

## Patentansprüche

1. Käfig (1, 15, 22, 30, 39) für einen Freilauf, der aus einem metallischen Außenring (5, 40) besteht, in dem konzentrisch ein metallisches Innenteil (9, 41) angeordnet ist, und bei dem in einem zwischen Außenring (5, 40) und Innenteil (9, 41) angeordneten Käfig (1, 15, 22, 30, 39) Klemmelemente (7, 43) untergebracht sind, die unter Einwirkung von Federn (8, 44) in Klemmkontakt mit Flächen des Außerings (5, 40) einerseits und des Innenteils (9, 41) andererseits gehalten sind, wobei der Käfig (1, 15, 22, 30, 39) aus einem spritz- oder gießbaren polymeren Werkstoff gebildet ist und Taschen (2, 16, 24, 32, 42) für die Klemmelemente (7, 43) aufweist, welche durch Stege (3, 17, 25, 31, 46) und wenigstens einen mit diesen verbundenen Stirnring (4, 18, 23, 33, 45) gebildet sind, wobei wenigstens eine Umfangsfläche des Käfigs (1, 15, 22, 30, 39) in Art eines Gleitlagers mit einer Zylinderfläche des benachbarten Bauteils (Außenring (5, 40) bzw. Innenteil (9, 41)) zusammenwirkt, dadurch gekennzeichnet, daß der Käfig (1, 15, 22, 30, 39) wenigstens im Bereich des Stirnringes (4, 18, 23, 33, 45) eine ringförmige metallische Armierung (13 ; 19, 20 ; 26, 27 ; 34, 35 ; 47) enthält, welche formschlüssig, insbesondere durch Umspritzen, mit dem Käfig (1, 15, 22, 30, 39) verbunden ist und deren Temperaturausdehnungskoeffizient im wesentlichen dem von Außenring (5, 40) und Innenteil (9, 41) entspricht.

2. Käfig nach Anspruch 1, dadurch gekennzeichnet, daß er zylindrische Klemmrollen (7) enthält, die mit Klemmrampen (6) in der Bohrung des Außenringes (5) einerseits und der zylindrischen Oberfläche des Innenteils (9) andererseits zusammenwirken.

3. Käfig nach Anspruch 1 und 2, dadurch gekennzeichnet, daß die Armierung durch ein scheibenförmiges Blechteil (13, 26, 34) gebildet ist.

4. Käfig nach Anspruch 1 und 2, dadurch gekennzeichnet, daß die radiale Erstreckung des schiebenförmigen Blechteiles (13, 26, 34) im wesentlichen des Stirnringes (4, 23, 33) entspricht.

5. Käfig nach Anspruch 1 und 2, dadurch gekennzeichnet, daß die Armierung durch ein hülsenförmiges im Bereich des Stirnringes (18) angeordnetes Blechteil (19) gebildet ist.

6. Käfig nach Anspruch 5, dadurch gekennzeichnet, daß das hülsenförmige Blechteil (19) in eine entsprechende Aussparung (21) in der Bohrung des Käfigs (15) eingeschnappt ist.

7. Käfig nach einem der Ansprüche 1 bis 6, dadurch gekennzeichnet, daß die Armierung (19, 26, 34) im wesentlichen axial gerichtete Fortsätze (20, 27, 35) aufweist, welche sich in die Stege (17, 25, 31) erstrecken.

8. Käfig nach einem der Ansprüche 1 bis 7, dadurch gekennzeichnet, daß der Käfig (22) im Bereich der Stege (25) radial nach innen vorspringende Segmente (29) aus dem polymeren Werkstoff aufweist, deren radial nach innen gerichtete Flächen ein Vielflächengleitlager für das Innenteil bilden.

9. Käfig nach einem der Ansprüche 5 bis 7, dadurch gekennzeichnet, daß im Bereich der Bohrung des Käfigs (30) das Blechteil um wenigstens einen Teil seiner Dicke gegenüber dem polymeren Werkstoff radial nach innen vorspringt.

10. Käfig nach Anspruch 9, dadurch gekennzeichnet, daß die Bohrungswandung des Blechteils mit einer Schicht (36) eines Gleitlagerwerkstoffs versehen ist.

11. Käfig nach einem der Ansprüche 1 bis 4, dadurch gekennzeichnet, daß sich die Armierung (34) zur äußeren Mantelfläche des Käfigs (30) erstreckt, an ihrem Außenumfang frei von polymerem Werkstoff ist und der Käfig (30) über den Außenumfang der Armierung (34) im Außenring zentriert ist.

12. Käfig nach einem der Ansprüche 1 bis 11 mit wenigstens einem radial nach außen gerichteten Vorsprung, welcher als Verdrehsicherung in eine entsprechende Ausnehmung des Außenringes eingreift, dadurch gekennzeichnet, daß sich die Armierung (13, 26, 34) in den Vorsprung erstreckt und an dessen Kontaktfläche mit der Ausnehmung frei von polymerem Werkstoff ist.

13. Käfig nach Anspruch 12, dadurch gekennzeichnet, daß der Vorsprung durch einen Fortsatz (37) der Armierung (34) gebildet ist.

14. Käfig nach Anspruch 1, dadurch gekennzeichnet, daß er unrunde Klemmkörper (43) enthält, die mit der zylindrischen Bohrung des Außenringes (40) einerseits und der zylindrischen Oberfläche des Innenteils (41) andererseits zusammenwirken.

## Claims

1. Cage (1, 15, 22, 30, 39) for a freewheel comprising a metallic outer ring (5, 40) in which a metallic inner part (9, 41) is concentrically arranged, and in which clamping elements (7, 43) are disposed in a cage (1, 15, 22, 30, 39) situated between the outer ring (5, 40) and the inner part (9, 41), which elements are held in clamped contact with the surfaces of the outer ring (5, 40) on the one hand and of the inner part (9, 41), on the other by the action of springs (8, 44), the cage (1, 15, 22, 30, 39) being made of an injectable or mouldable polymeric material and having pockets (2, 16, 24, 32, 42) for the clamping elements (7, 43) which pockets are formed by webs (3, 17, 25, 31, 46) and at least one front ring (4, 18, 23, 33, 45) connected with these, wherein at least one peripheral surface of the cage (1, 15, 22, 30, 39) cooperates with a cylindrical surface of the adjacent part (outer ring (5, 40) or inner part (9, 41), as the case may be) in the manner of a sliding bearing, characterized in that the cage (1, 15, 22, 30, 39) is provided at least in the region of the front ring (4, 18, 23, 33, 45) with an annular metallic armour (13 ; 19, 20 ; 26, 27 ; 34, 35 ; 47) interlocked with the cage (1, 15, 22, 30, 39), in particular by spray coating and whose thermal expansion coefficient corresponds essentially to that of the outer ring (5, 40) and the inner part (9, 41).

2. Cage according to claim 1, characterized in that it contains cylindrical clamping rollers (7) cooperating on the one hand with clamping ramps (6) in the bore of the outer ring (5), and on the other, with the cylindrical surface of the inner part (9).

3. Cage according to claims 1 and 2, characterized in that the armour is formed by a disk-shaped sheet metal part (13, 26, 34).

4. Cage according to claims 1 and 2, characterized in that the radial extension of the disk-shaped sheet metal part (13, 26, 34) corresponds essentially to that of the front ring (4, 23, 33).

5. Cage according to Claims 1 and 2, characterized in that the armour is formed by a sleeve-shaped sheet metal part (19) arranged in the region of the front ring (18).

6. Cage according to Claim 5, characterized in that the sheet metal part (19) is snapped into a corresponding recess (21) in the bore of the cage (15).

7. Cage according to one of the Claims 1 to 6, characterized in that the armour (19, 26, 34) is provided with essentially axially directed prolongations (20, 27, 35) extending into the webs (17, 25, 31).

8. Cage according to one of the Claims 1 to 7, characterized in that, in the region of the webs (25), the cage (22) has radially inwards protruding segments (29) of polymeric material whose radially inwards directed surfaces form a multi-surface sliding bearing for the inner part.

9. Cage according to one of the claims 5 to 7, characterized in that, in the region of the bore of the cage (30), the sheet metal part protrudes radially inwards beyond the polymeric material by at least a part of its thickness.

10. Cage according to Claim 9, characterized in that the bore wall of the sheet metal part is provided with a coating (36) of a sliding bearing material.

11. Cage according to one of the Claims 1 to 4, characterized in that the armour (34) extends to the outer peripheral surface of the cage (30) and is free from polymeric material at its outer periphery and that the cage (30) is centered in the outer ring via the outer periphery of the armour (34).

12. Cage according to one of the Claims 1 to 11 with at least one radially outwards directed projection which engages as anti-rotation device in a corresponding recess of the outer ring, characterized in that the armour (13, 26, 34) extends into the projection and is free from polymeric material at the contact surface between the projection and the recess.

13. Cage according to Claim 12, characterized in that the projection is formed by a prolongation (37) of the armour (34).

14. Cage according to Claim 1, characterized in that it contains non-circular clamping elements (43) which cooperate on the one hand with the cylindrical bore of the outer ring (40), and on the other, with the cylindrical surface of the inner part (41).

**Revendications**

1. Cage (1, 15, 22, 30, 39) pour une roue libre comportant une bague externe métallique (5, 40) dans laquelle est disposée concentriquement une pièce interne métallique (9, 41), des éléments de serrage (7, 43) étant logés dans une cage (1, 15, 22, 30, 39) disposée entre la bague externe (5, 40) et la pièce interne (9, 41), lesdits éléments de serrage étant maintenus en contact serré contre des surfaces de la bague externe (5, 40) d'une part, et de la pièce interne (9, 41) d'autre part, sous l'action de ressorts (8, 44), la cage (1, 15, 22, 30, 39) étant faite en une matière polymère injectable ou coulable et ayant des poches (2, 16, 24, 32, 42) pour les éléments de serrage (7, 43) formées par des entretoises (3, 17, 25, 31, 46) et au moins une bague frontale (4, 18, 23, 33, 45) liée à celles-ci, une surface périphérique au moins de la cage (1, 15, 22, 30, 39) coopérant à la manière d'un palier-glisseur avec une surface cylindrique de l'élément de construction voisin ((bague externe (5, 40) ou pièce interne (9, 41), selon le cas)), caractérisée en ce qu'au moins dans la région de la bague frontale (4, 18, 23, 33, 45), la cage (1, 15, 22, 30, 39) a une armature annulaire métallique (13 ; 19, 20 ; 26, 27 ; 34, 35 ; 47) solidarisée à la cage (1, 15, 22, 30, 39) par concordance de forme, en particulier par injection, et dont le coefficient de dilatation thermique correspond sensiblement à celui de la bague externe (5, 40) et de la pièce interne (9, 41).

2. Cage selon la revendication 1 caractérisée en ce qu'elle contient des galets de serrage cylindriques (7) coopérant d'une part, avec des rampes de serrage (6) dans l'alésage de la bague externe (5), et d'autre part, avec la surface cylindrique de la pièce interne (9).

3. Cage selon les revendications 1 et 2, caractérisée en ce que l'armature est formée par un élément discoïde en tôle (13, 26, 34).

4. Cage selon les revendications 1 et 2, caractérisée en ce que l'étendue radiale de l'élément discoïde en tôle (13, 26, 34) correspond sensiblement à celle de la bague frontale (4, 23, 33).

5. Cage selon les revendications 1 et 2, caractérisée en ce que l'armature est formée par un élément de tôle en manchon (19) disposé dans la région de la bague frontale (18).

6. Cage selon la revendication 5, caractérisée en ce que l'élément de tôle en manchon (19) est encliqueté dans un évidement correspondant (21) dans l'alésage de la cage (15).

7. Cage selon l'une des revendications 1 à 6, caractérisée en ce que l'armature (19, 26, 34) est munie de prolongements (20, 27, 35) dirigés sensiblement axialement et s'étendant dans les entretoises (17, 25, 31).

8. Cage selon l'une des revendications 1 à 7, caractérisée en ce que la cage (22), a, dans la région des entretoises (25), des segments (29) en matière polymère faisant saillie radialement vers l'intérieur, segments dont les surfaces dirigées radialement vers l'intérieur forment un palier-glisseur multiface pour la pièce interne.

9. Cage selon l'une des revendications 5 à 7, caractérisée en ce que dans la région de l'alésage de la cage (30), l'élément en tôle fait saillie radialement vers l'intérieur par rapport à la matière polymère par au moins une partie de son épaisseur à lui.

10. Cage selon la revendication 9, caractérisée en ce que la paroi d'alésage de l'élément en tôle est pourvue d'une couche (36) d'un matériau de palier-glisseur.

11. Cage selon l'une des revendications 1 à 4, caractérisée en ce que l'armature (34) s'étend jusqu'à la surface de l'enveloppe de la cage (30), qu'elle est libre de matière polymère à sa périphérie extérieure et que la cage (30) est centrée dans la bague externe à l'aide de la périphérie extérieure de l'armature (34).

12. Cage selon l'une des revendications 1 à 11, ayant au moins une saillie dirigée radialement vers l'extérieur venant en prise en tant que dispositif anti-torsion dans un évidement correspondant de la bague externe, caractérisée en ce que l'armature (13, 26, 34) s'étend dans la saillie et est libre de matière polymère à la surface de contact de celle-ci avec l'évidement.

13. Cage selon la revendication 12, caractérisée en ce que la saillie est formée par un prolongement (37) de l'armature (34).

14. Cage selon la revendication 1, caractérisée en ce qu'elle contient des corps de serrage non-circulaires (43) coopérant d'une part, avec l'alésage cylindrique de la bague frontale (40), et d'autre part, avec la surface cylindrique de la pièce interne (41).

## Fig. 1

## Fig. 2

Fig. 3

Fig. 4

Fig. 5

**Fig. 6**

**Fig. 7**

**Fig. 8**

Fig. 9

Fig. 10

Fig. 11

Fig. 12

Fig. 13

Fig. 14

Fig. 15

Fig. 16

Fig. 17